(19) Europäisches Patentamt

European Patent Office

Office européen des brevets

(11) **EP 1 445 878 A1**

(12) **EUROPEAN PATENT APPLICATION**
published in accordance with Art. 158(3) EPC

(43) Date of publication:
**11.08.2004 Bulletin 2004/33**

(51) Int Cl.7: **H04B 7/26**, H04J 13/00

(21) Application number: **02775421.7**

(86) International application number:
**PCT/JP2002/011274**

(22) Date of filing: **30.10.2002**

(87) International publication number:
**WO 2003/041301 (15.05.2003 Gazette 2003/20)**

(84) Designated Contracting States:
**AT BE BG CH CY CZ DE DK EE ES FI FR GB GR IE IT LI LU MC NL PT SE SK TR**

(30) Priority: **07.11.2001 JP 2001341331**

(71) Applicant: **NEC Corporation
Minato-ku, Tokyo 108-8001 (JP)**

(72) Inventor: **HAYATA, Toshihiro
Minato-ku, Tokyo 108-8001 (JP)**

(74) Representative: **Betten & Resch
Patentanwälte,
Theatinerstrasse 8
80333 München (DE)**

(54) **INTER−FREQUENCY HHO METHOD IN MOBILE COMMUNICATION SYSTEM**

(57) A mobile station (MS), upon completing monitoring of downlink signals, reports both the completion of monitoring and the time of a transmission gap in which the transmission of uplink training signals is to begin to a base station (BST1) using the HHO origin frequency. The mobile station (MS) transmits the uplink training signals by a transmission power that has been designated beforehand, and the base station (BST1) attempts reception of these signals. When the base station (BST1) receives the uplink training signals, it measures and holds the reception timing and reception SIR at that time, calculates the difference between the reception SIR and a predetermined target SIR that is necessary for obtaining adequate reception quality, and reports this difference to the mobile station (MS) by an ACK signal using the HHO origin frequency. The mobile station (MS), upon receiving the ACK signal, changes the frequency to the HHO destination frequency and begins transceiving.

Fig. 6

**Description**

TECHNICAL FIELD

The present invention relates to a mobile communication system, a base station, a mobile station and an inter-frequency HHO method that is used in these devices, and more particularly to an inter-frequency HHO (Hard Hand Over) method in a W-CDMA (Wideband-Code Division Multiple Access) system.

BACKGROUND ART

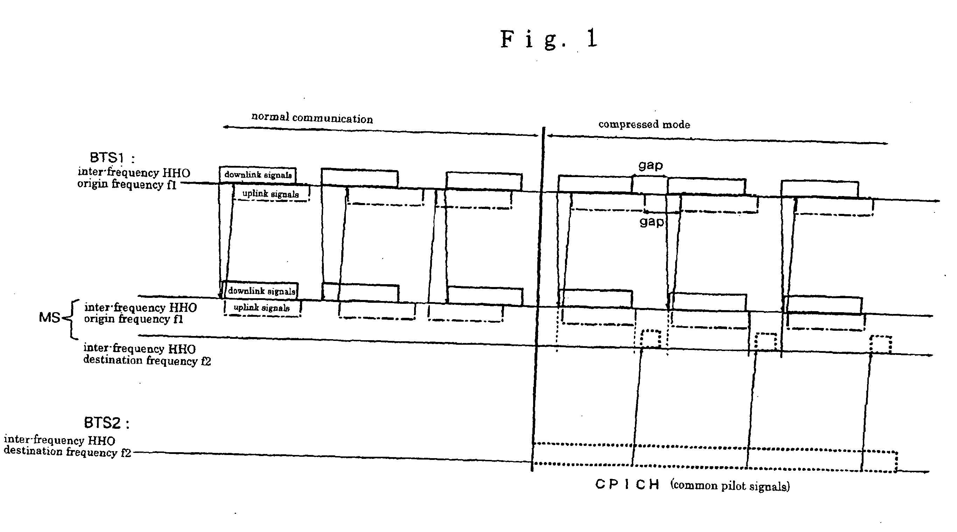

In inter-frequency HHO methods of the prior art, a mobile station (MS: Mobile Station) uses a CPICH (Common Pilot Channel) to monitor the reception timing of downlink signals in the frequency of the HHO destination, as shown in Fig. 1.

Here, the length and position of gaps in which data are not transmitted and that are generated during normal transmission between a base station (BTS: base station) and a mobile station have no regularity. In contrast, the length and position of gaps (transmission gaps), in which data are not transmitted and that are generated during compressed mode for enabling measurement of the different frequency cells when carrying out hand over to a different frequency, follow a predetermined pattern and show regularity.

A mobile station uses these transmission gaps during compressed mode to receive a portion of the CPICH that is being transmitted at the HHO destination frequency, whereby the mobile station both confirms the maintenance of reception quality at the HHO destination and learns the reception timing of the downlink signals.

In the above-described inter-frequency HHO method of the prior art, a base station was able to receive in advance the downlink signals of the HHO destination frequency before performing inter-frequency HHO, but the base station had no mechanism for monitoring uplink signals in the HHO destination frequency. As a result, when the frequency was switched from the HHO origin to the HHO destination, there was a potential that the initial transmission power of the uplink signal at the HHO destination would not be sufficient for ensuring adequate reception quality. In addition, because the reception timing in the HHO destination frequency was not known, considerable time was required for acquiring the uplink signal, whereby communication quality was degraded, and reception was disrupted.

DISCLOSURE OF INVENTION

It is an object of the present invention to solve the above-described problems, and to provide a mobile communication system, a base station, a mobile station, and an inter-frequency HHO method that is used in these devices that enable smooth and stable frequency switching.

The mobile communication system of the present invention is a mobile communication system in which CDMA (Code Division Multiple Access) communication is carried out between a mobile station and a base station, wherein this CDMA communication includes a compressed mode, which is a mode of intermittent communication that includes transmission gaps in which communication is not performed; the mobile communication system being provided with:

a mobile station that is provided with means for using the transmission gaps to transmit training signals in the uplink direction; and
a base station that is provided with means for using the training signals to perform training of reception timing and transmission power.

The inter-frequency HHO method of the present invention is a method for inter-frequency HHO (Hard Hand Over) of a mobile communication system in which CDMA (Code Division Multiple Access) communication is performed that includes a compressed mode, which is a mode of intermittent communication that includes transmission gaps in which communication is not performed; the inter-frequency HHO method containing steps of:

using the transmission gaps to transmit training signals in the uplink direction from the mobile station; and
by means of the training signal, training the reception timing and transmission power in the base station.

In other words, the mobile communication system of the present invention provides a method of realizing stable inter-frequency HHO (Hard Hand Over) in a W-CDMA (Wideband Code Division Multiple Access) system.

More specifically, in the mobile communication system of the present invention, uplink training signals are transmitted in the frequency of the HHO destination at the locations of transmission gaps during compressed mode in communication between a base station (BTS) and a mobile station (MS).

With regard to the reception of the HHO destination frequency by a base station, these training signals enable training before the inter-frequency HHO, whereby the uplink reception timing and transmission power can be confirmed before performing inter-frequency HHO. As a result, smooth and stable inter-frequency HHO, i.e., frequency switching, can be realized.

BRIEF DESCRIPTION OF DRAWINGS

Fig. 1 is a timing chart showing the operation of a mobile communication system according to an example of the prior art.

Fig. 2 is a block diagram showing the construction of a mobile communication system according to a working example of the present invention.

Fig. 3 is a block diagram showing the construction of a base station of Fig. 2.

Fig. 4 is a block diagram showing the construction of the base station of Fig. 2.

Fig. 5 is a block diagram showing the construction of the mobile station of Fig. 2.

Fig. 6 is a timing chart showing the operation of the mobile communication system according to a working example of the present invention.

Fig. 7 is a flow chart showing the operation of mobile communication system according to a working example of the present invention.

Fig. 8 is a flow chart showing the operation of the mobile communication system according to a working example of the present invention.

Figs. 9(a)-9(d) are views for explaining inter-frequency HHO.

Figs. 10(a) and 10(b) show the exchange of data between different base stations.

BEST MODE FOR CARRYING OUT THE INVENTION

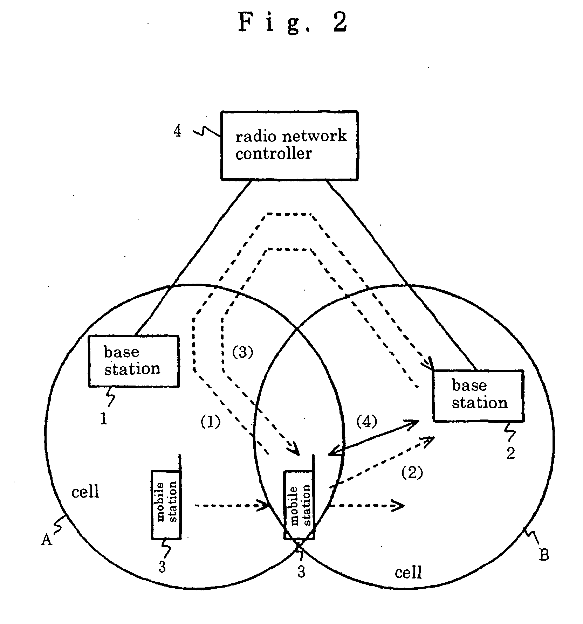

Explanation next regards a working example of the present invention with reference to the accompanying drawings. Fig. 2 is a block diagram showing the system configuration of a mobile communication system according to a working example of the present invention. In Fig. 2, the mobile communication system according to a working example of the present invention is made up by: base stations (BTS) 1 and 2, mobile stations (MS) 3, and radio network controller (RNC).

Mobile station 3, upon completion of monitoring of a downlink signal, uses the HHO (Hard Hand Over) origin frequency to both report completion of monitoring of the downlink signal to base station 1 and report the time (frame and time slot (TS)) of a transmission gap in which the transmission of uplink training signals is to begin. This transmission gap is reported from mobile station 3 to base station 2 by way of base station 1 and radio network controller 4 ((1) in Fig. 2).

When the designated time arrives, mobile station 3 transmits to base station 2 uplink training signals in the HHO destination frequency at the location of transmission gaps during the compressed mode in communication between base station 1 and its own station ((2) in Fig. 2).

Base station 2 reports to mobile station 3 by way of radio network controller 4 and base station 1 a NACK (Negative ACKnowledgement) signal if the uplink training signals are not received at the time that is designated from mobile station 3 and an ACK (ACKnowledgement) signal if the uplink training signals are received ((3) in Fig. 2).

Thus, if base station 2 is able to receive uplink training signals from mobile station 3, base station 2 is able to realize training relating to the reception of the HHO destination frequency before carrying out inter-frequency HHO, is able to check the uplink reception timing and transmission power before performing inter-frequency HHO, and can realize smooth and stable inter-frequency HHO, i.e., frequency switching. Mobile station 3 and base station 2 then begin communication with each other ((4) in Fig. 2).

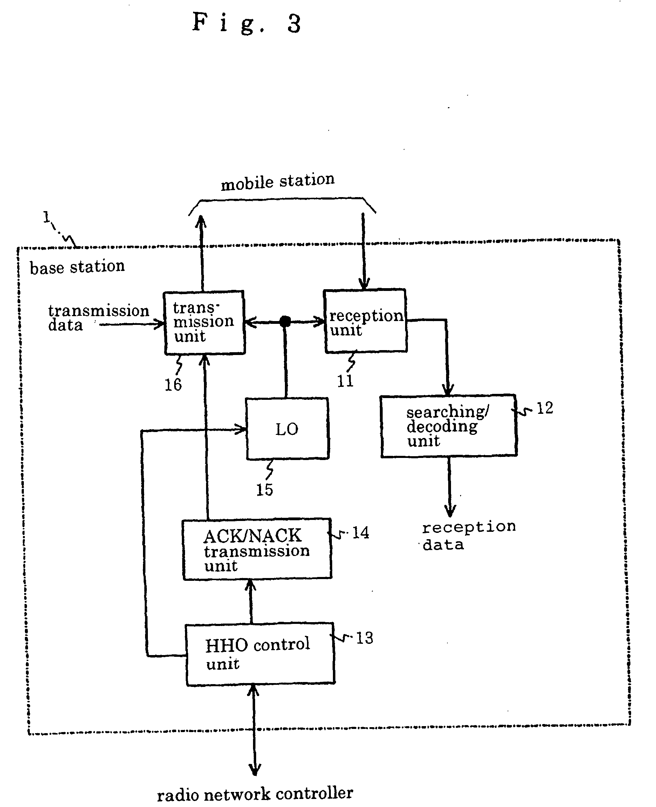

Fig. 3 is a block diagram showing configuration of base station 1 in Fig. 2. In Fig. 3, base station 1 is made up of: reception unit 11, searching/decoding unit 12, HHO control unit 13, ACK/NACK transmission unit 14, LO (Local Oscillator) 15, and transmission unit 16.

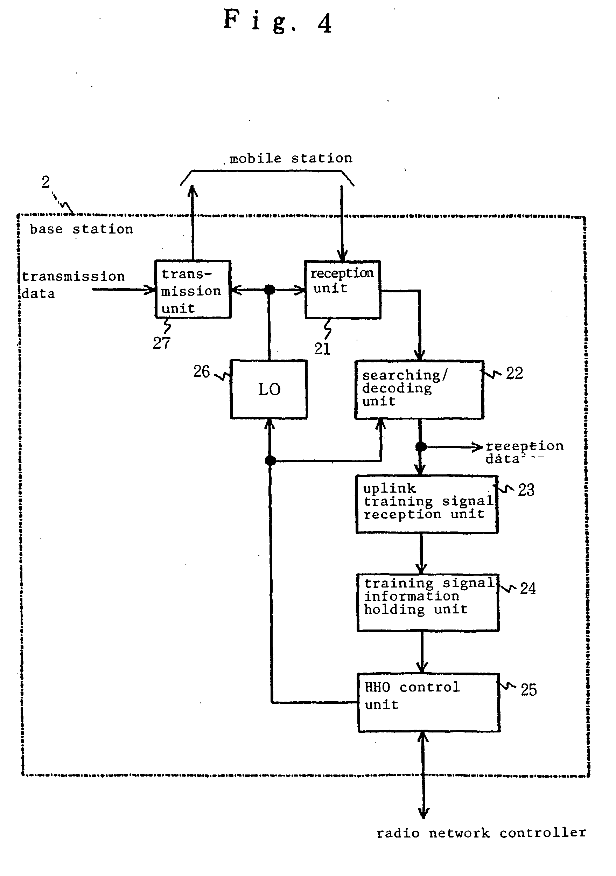

Fig. 4 is a block diagram showing the construction of base station 2. In Fig. 4, base station 2 is made up of: reception unit 21, searching/decoding unit 22, uplink training signal reception unit 23, training signal information holding unit 24, HHO control unit 25, LO 26, and transmission unit 27. Although not shown in the figure, base stations 1 and 2 are also provided with each of the blocks shown in Fig. 3 and Fig. 4. However, redundant portions such as the transceiving units may be limited to one unit.

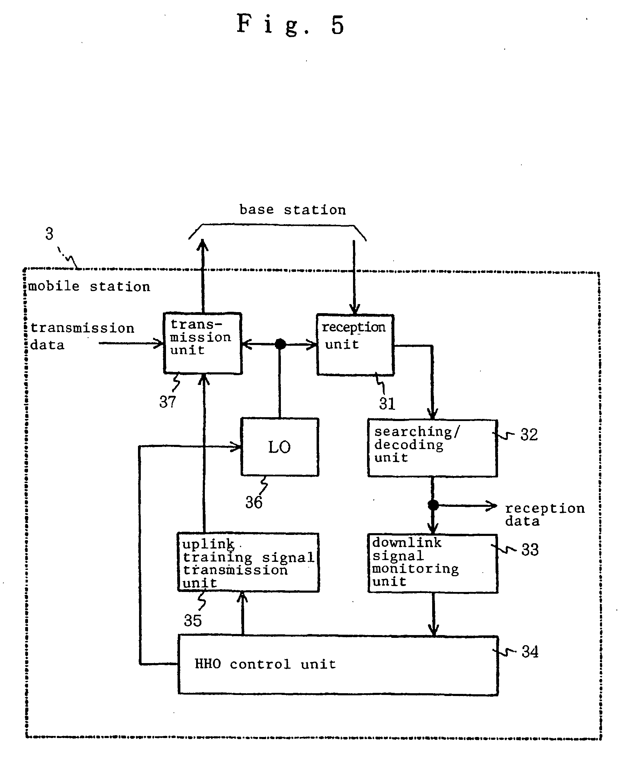

Fig. 5 is a block diagram showing the construction of mobile station 3 of Fig. 2. In Fig. 5, mobile station 3 is made up from: reception unit 31, searching/decoding unit 32, downlink signal monitoring unit 33, HHO control unit 34, uplink training signal transmission unit 35, LO 36, and transmission unit 37.

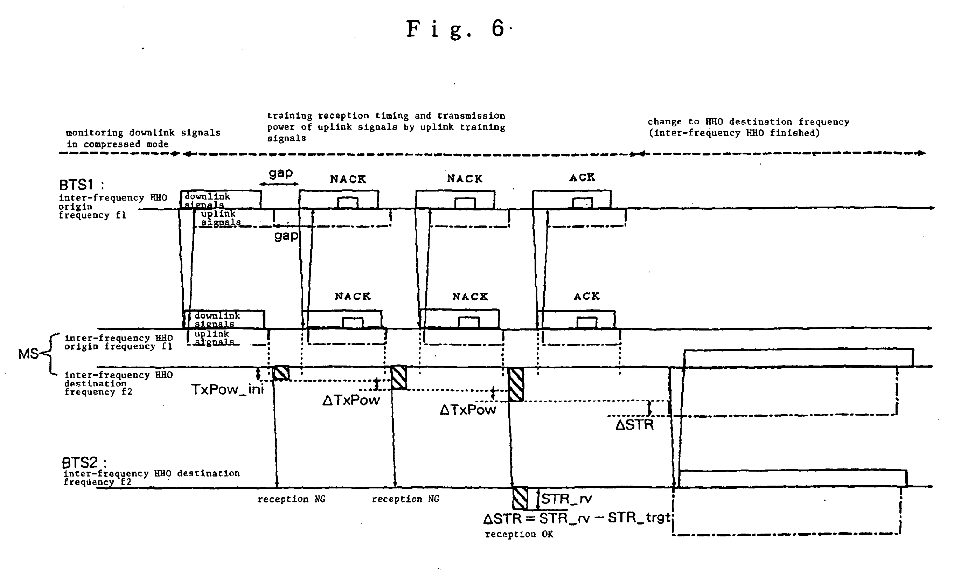

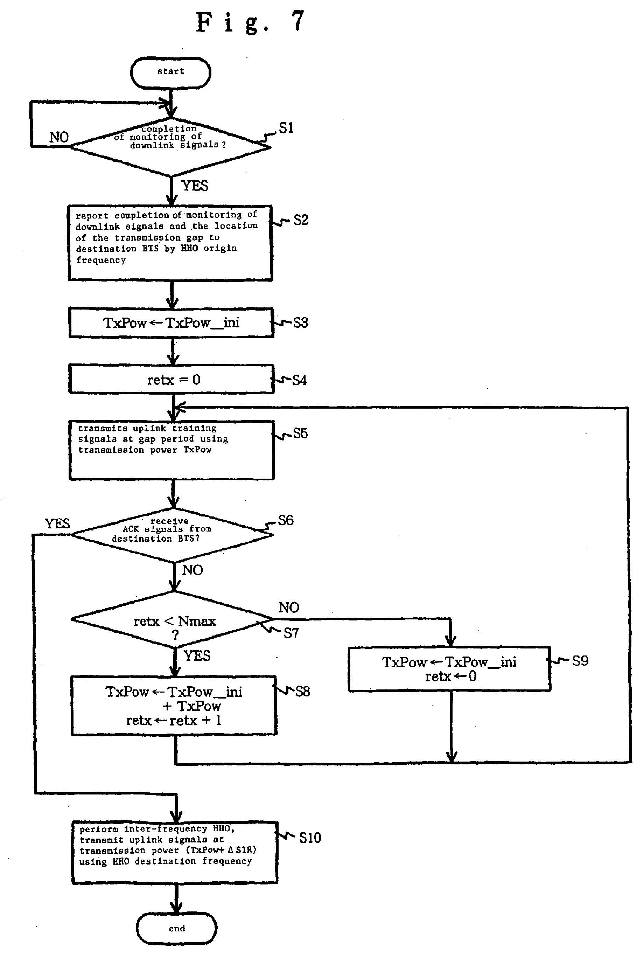

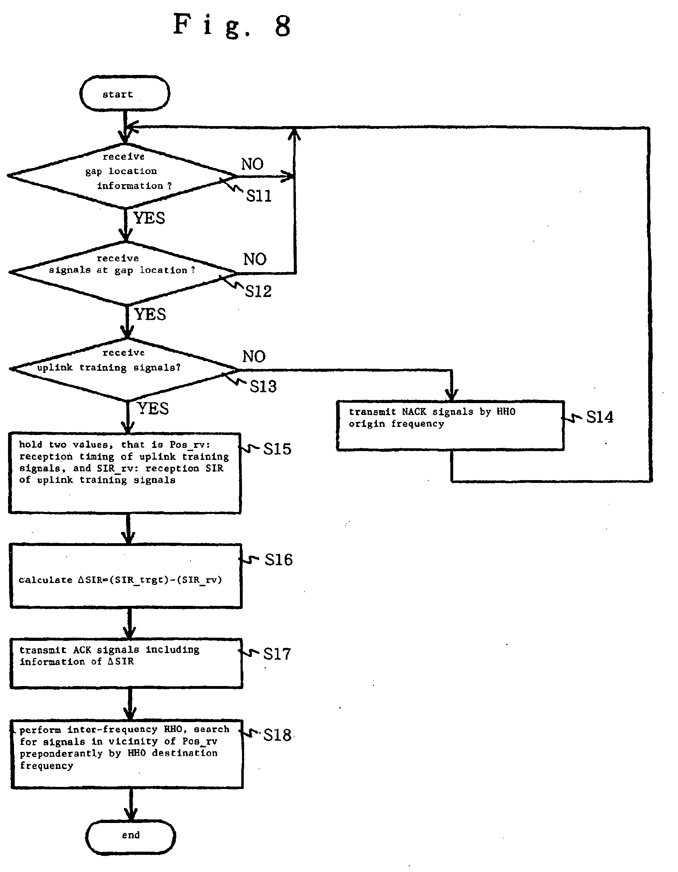

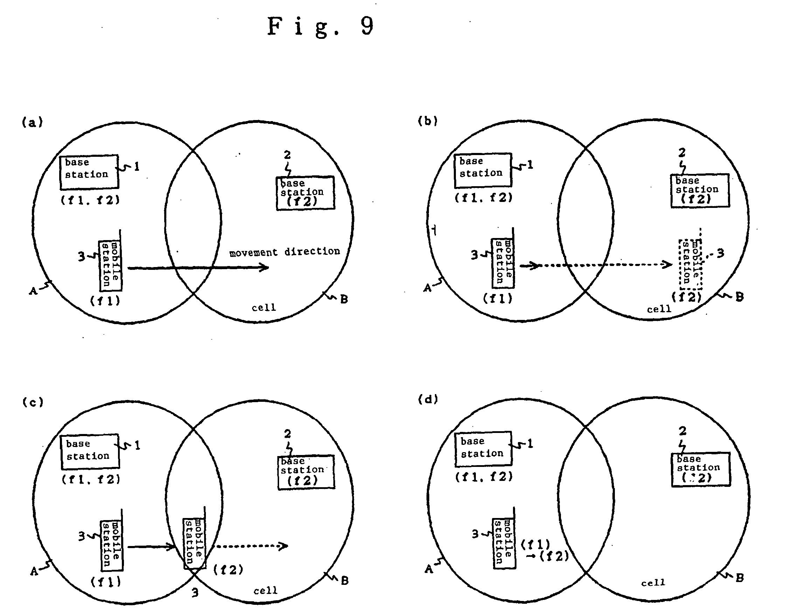

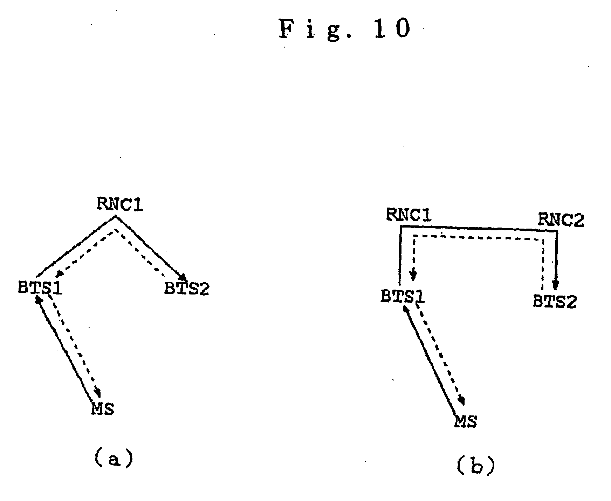

Fig. 6 is a timing chart showing the operation of the mobile communication system according to a working example of the present invention; Fig. 7 and Fig. 8 are flow charts showing the operation of the mobile communication system according to a working example of the present invention; Figs. 9(a)-9(d) are views for explaining inter-frequency HHO; and Fig. 10(a) and Fig. 10(b) are views for explaining the exchange of data between different base stations. The mobile communication system according to a working example of the present invention is next explained with reference to these Figs. 2-10.

Explanation first regards the procedures for inter-frequency HHO in W-CDMA (Wideband Code Division Multiple Access) communication. W-CDMA communication is a third-generation mobile communication method discussed in the 3GPP (Third Generation Partnership Project).

Normally, base station 1 holds a plurality of frequencies and communicates with mobile station 3 using any one of the frequencies. However, as shown in Fig. 9(a), when mobile station 3 that communicates on frequency f1 in cell A, which is the communication area of base station 1, moves to cell B, which is the communication area of base station 2 that has only frequency f2, mobile station 3 must change the reception frequency from frequency f1 to frequency f2. This is an operation referred to as an "inter-frequency HHO."

There are two methods of changing from frequency f1 to frequency f2: a method in which the change from frequency f1 to frequency f2 takes place within the area of base station 1 (refer to Fig. 9(b)); and a method in which the change from frequency f1 of base station 1 to frequency f2 of base station 2 takes place in the area of overlap of the areas of base station 1 and base station 2 (refer to Fig. 9(c)). Either method may be adopted.

In addition, the present working example can also be applied for changing frequencies from frequency f1 to frequency f2 when, for example, mobile station 3 communicates by frequency f1 in cell A, which is the communication area of base station 1, and mobile station 3 cannot be accommodated by base station 1, or when processing in frequency f1 becomes impossible due to failures or maintenance (refer to Fig. 9(d)). In such cases, the above-described method is used in which the change from frequency f1 to frequency f2 takes place within the above-described area of base station 1.

Before mobile station 3 effects inter-frequency HHO, a mode is initiated in which intermittent communication is carried out, this mode being referred to as "compressed mode." In a transmission gap, which is a time interval in which communication is not performed in this compressed mode, the frequency is changed from the HHO origin frequency (f1) to the HHO destination frequency (f2), and mobile station 3 receives a CPICH (Common PIlot CHannel), which is a reference signal that is constantly being transmitted on all frequencies by base station 2. In this way, it is confirmed that the same reception quality is obtained as before the shift despite the shift to the frequency of the HHO destination, i.e., that the power output allows the same reception quality to be obtained; and the reception timing of signals at the HHO destination is checked.

In contrast with the normal communication mode, compressed mode is an intermittent communication mode having time intervals in which communication is not performed, as shown in Fig. 1.

Normally, mobile station 3 has only one LO 36 and therefore cannot receive the CPICH of the HHO destination that is transmitting on HHO destination frequency f2 while also communicating on HHO origin frequency f1.

However, as shown in Fig. 1, by providing transmission gaps, which are time intervals in which communication is not performed, and switching from HHO origin frequency f1 to HHO destination frequency f2 in these time intervals, monitoring the downlink signals in HHO destination frequency f2 becomes possible.

Details regarding of the compressed mode are described in 3GPP (Third Generation Partnership Project) Standards TS25.212 V3.5.04.4 "Compressed Mode"; and TS25.215 V3.5.06.1.1 Compressed Mode."

Even in normal mode, intermittent communication occurs in which transmission is halted in portions that lack data for transmission. In intermittent communication in normal mode, however, the location and length of intervals in which transmission is halted depend on the behavior of data that are transmitted; but compressed mode differs in that the transmission of data is definitely halted in conformity with set rules. that follow predetermined patterns without relation to the data.

With respect to downlink transmission by means of this method, signals of adequate reception quality can be received at mobile station 3 despite changes from HHO origin frequency f1 to HHO destination frequency f2.

With respect to uplink transmission, however, base station 2 lacks a means of monitoring signals of HHO destination frequency f2 that are transmitted by mobile station 3, and as a result, in contrast to downlink transmission, the problems occur that the initial uplink transmission power at the HHO destination may not be able to guarantee suitable reception quality, and since the reception timing of signals at the HHO destination is not known, time is required to capture uplink signals.

These problems raise the possibility of degradation of the reception quality or disruption of uplink communication when shifting from HHO origin frequency f1 to HHO destination frequency f2, or further, the possibility that the extended time required to capture the reception signal will result in the loss of communication.

Fig. 6 shows the state when training is carried out for HHO between mobile station 3 and base station 2 using the HHO destination frequency (f2) in the location of transmission gaps in the compressed mode in the W-CDMA communication method.

However, as shown in Fig. 6, after completion of monitoring of the downlink signals, uplink signals for training (hereinbelow the uplink training signals) can be transmitted in the HHO destination frequency in the transmission gaps that mobile station 3 normally uses for monitoring the downlink signals in the HHO destination frequency, thereby enabling training at base station 2.

Mobile station 3, having completed monitoring of the downlink signal by means of downlink signal monitoring unit 33, uses the HHO origin frequency to report to base station 1 both the completion of monitoring of the downlink signal and the time (frame, and time slot (TS)) of the transmission gap in which the transmission of the uplink training signal from uplink training signal transmission unit 35 is to begin. The content of this report is reported from base station 1 to radio network controller 4 and from radio network controller 4 to base station 2.

At the time designated to base station 2, mobile station 3 transmits uplink training signals by the transmission power (= TxPow) that was designated in advance from uplink training signal transmission unit 35, and base station 2 attempts to receive the signal.

Base station 2, if able to receive the uplink training signal at uplink training signal reception unit 23; measures the reception timing (= Pos_rv) and the reception SIR (Signal Interference Ratio) (= SIR_rv) at this time by means of uplink training signal reception unit 23 and holds the result in uplink training signal information holding unit 24.

Uplink training signal reception unit 23 next calculates the difference between the reception SIR and the target SIR (=SIR_trgt) that is necessary for obtaining a predetermined adequate reception quality {ΔSIR = (SIR_trgt) -(SIR_rv)}, and, using the HHO origin frequency, reports an ACK signal to base station 1 by way of radio network controller 4 and the ACK signal is reported from ACK/NACK transmission unit 14 of base station 1 to mobile station 3. This ACK signal contains the difference between the target SIR and the received SIR (ΔSIR).

If, on the other hand, uplink training signal reception unit 23 of base station 2 is not able to receive the uplink training signals during the time of the transmission gap in which the uplink training signal was reported, base station 2 uses the HHO origin frequency to report a NACK signal to base station 1 by way of radio network controller 4 and the NACK signal is reported from ACK/NACK transmission unit 14 of base station 1 to mobile station 3.

Mobile station 3, having received the NACK signal, adds the predetermined offset power (= ΔTxPow) to the transmission power of the preceding uplink training signals and transmits the uplink training signals at this power. This retransmission of the uplink training signals is continued until the ACK signal can be received.

In other words, when a NACK signal is received N times, the transmission power of the $(N+1)_{th}$ uplink training signals can be shown by the following formula:

$$\text{Transmission power} = \text{TxPow} + \Delta\text{TxPow} \times N$$

However, a large number of retransmissions retx and resulting excessive transmission power of the uplink training signals can result in an increase in the level of interference for other users and degrade reception characteristics, and as a result, retransmission is performed with the transmission power of the uplink training signal returned to TxPow when the number of retransmissions reaches a predetermined value (= Nmax).

Mobile station 3, having received an ACK signal, changes the frequency to the HHO destination frequency in accordance with inter-frequency HHO and begins transceiving. At this time, the uplink transmission power is a value that can be calculated by the following formula:

$$\text{Transmission power} = \text{TxPow} + \Delta\text{SIR}$$

In this formula, TxPow is the transmission power of the uplink training signals when the ACK signal can be received.

If uplink transmission is performed at this transmission power by means of the training by the above-described uplink training signals, reception is possible at base station 2 at the target SIR (SIR_trgt), which is the transmission power at which sufficient reception quality can be obtained.

In addition, the reception timing is found by means of the previous training to be Pos_rv, whereby a concentrated search in this vicinity by searching/decoding unit 22 enables the quick reception of the uplink signal at base station 2 with good reception quality.

The operation of the mobile communication system of a working example of the present invention is next explained with reference to Fig. 7 and Fig. 8. As shown in Fig. 1, mobile station 3 that performs inter-frequency HHO first acquires the reception timing of the downlink signal at the HHO destination frequency by receiving a CPICH (Common Pilot Channel), which is a reference signal that is always transmitted by base station 1 on all frequencies in transmission gap intervals of the compressed mode, and completes monitoring of the downlink signal by means of downlink signal monitoring unit 33 (Step S1 in Fig. 7).

Mobile station 3 next reports, by the HHO origin frequency, to base station 2 by way of base station 1 and radio network controller 4 the completion of monitoring of downlink signals and the location (frame number, time slot number) of the transmission gap in which uplink training signals are transmitted (Step S2 of Fig. 7).

Mobile station 3 then sets transmission power TxPow to the initial value TxPow_ini at the reported transmission gap location as shown in Fig. 6 (Step S3 in Fig. 7), and transmits uplink training signals (Step S5 in Fig. 7). At this time, mobile station 3 initializes the number of retransmissions retx to 0 (Step S4 in Fig. 7).

Base station 2 waits for the uplink training signals at the transmission gap location that was reported from mobile station 3, and if it fails to receive the signals (Steps S11-S13 in Fig. 8), reports a NACK signal to mobile station 3 by the HHO origin frequency (Step S14 in Fig. 8).

Mobile station 3, having received this NACK signal, compares the number of retransmissions retx with the predetermined maximum number of retransmissions Nmax (Steps S6 and S7 in Fig. 7). If the number of retransmissions retx is smaller than the maximum number of retransmissions Nmax, mobile station 3 adds transmission power ΔTxPow to the preceding transmission power TxPow and increases the number of retransmissions retx by one (Step S8 in Fig. 7).

On the other hand, if the number of retransmissions retx is equal to or greater than the maximum number of retransmissions Nmax, mobile station 3 both sets the transmission power TxPow to the initial value TxPow_ini and initializes the number of retransmissions retx to 0 (Step S9 in Fig. 8). This is performed to prevent adverse effects on the reception characteristics of another mobile station 3 that would occur when transmission power TxPow is increased without limit.

When mobile station 3 updates transmission power TxPow and the number of retransmissions retx in this way, uplink training signals are again transmitted at the transmission gap location at transmission power TxPow (Step S5 in Fig. 7).

If base station 2 receives the uplink training signals (Step S13 in Fig. 8), base station 2 calculates the two values Pos_rv (the reception timing of the uplink training signals) and SIR_rv (the reception SIR of the uplink training signals), and holds these values in training signal information holding unit 24 (Step S15 in Fig. 8).

Base station 2 compares the target SIR (SIR_trgt) that can obtain the predetermined adequate uplink reception characteristics and reception SIR (SIR_rv) and calculates the difference ($\Delta$SIR) between the target SIR and reception SIR by means of the following formula (Step S16 in Fig. 8):

$$\Delta SIR = (SIR\_trgt) - (SIR\_rv)$$

Base station 2 transmits an ACK signal to mobile station 3 by HHO origin frequency (Step 17 in Fig. 8). Here, information relating to the value of the difference ($\Delta$SIR) between the target SIR and reception SIR is included in the ACK signal.

Mobile station 3, having received the ACK signal, performs inter-frequency HHO, switches frequencies, and then both begins to receive the downlink signals and transmits uplink signals at the transmission power that is shown by the following formula (Step S10 in Fig. 7):

$$uplink\ transmission\ power = TxPow + \Delta SIR$$

Base station 2 carries out inter-frequency HHO and searches for the uplink signals from mobile station 3 in the vicinity of timing (Pos_rv) at which the uplink training signals were received at the above-described HHO destination frequency (Step S18 in Fig. 8), and base station 2 is thus able to quickly receive the uplink signals. Control relating to the above-described inter-frequency HHO (including training control that precedes inter-frequency HHO) is implemented by HHO control units 13, 25, and 34 of base stations 1 and 2 and mobile station 3.

As with the method shown in Fig. 9c, when base station 1 that transmits the HHO origin frequency differs from base station 2 that transmits the HHO destination frequency, information such as success (ACK) or failure (NACK) to receive an uplink timing signal and $\Delta$SIR is exchanged between base stations 1 and 2 by way of radio network controller 4 that is located at a higher level than base station 1, as shown in Fig. 10(a) and Fig. 10(b).

Thus, when carrying out inter-frequency HHO in a mobile communication system of the W-CDMA method, an uplink training signal is transmitted at the frequency of the HHO destination at the locations of transmission gaps in compressed mode, and by means of this uplink training signal, base station 2, with regard to the reception of the HHO destination frequency, carries out training at the HHO destination frequency before carrying out inter-frequency HHO to enable smooth and stable switching of frequencies.

As described in the foregoing explanation, according to the present working example, in a mobile communication system that includes a compressed mode, which is an intermittent communication mode having transmission gaps in which communication is not performed in communication between a mobile station and base station, the transmission gaps are used to transmit training signals in the uplink direction from mobile stations, and these training signals are used in training of the reception timing and transmission power, whereby the present working example obtains the effect of enabling smooth and stable frequency switching.

**Claims**

1. A mobile communication system wherein CDMA (Code Division Multiple Access) communication is carried out between a mobile station and a base station, said CDMA communication including a compressed mode which is a mode of intermittent communication having transmission gaps in which communication is not performed; said mobile communication system comprising:

   a mobile station that is provided with means for using said transmission gaps to transmit training signals in the uplink direction; and
   a base station that is provided with means for using said training signals to perform training of reception timing and transmission power.

2. A mobile communication system according to claim 1, wherein said mobile station further comprises:

   means for monitoring downlink signals in said transmission gaps; and
   means for, after completing monitoring of said downlink signals, reporting to said base station the location of a transmission gap in which the transmission of said training signals is to start.

3. A mobile communication system according to claim 2, wherein said means for monitoring downlink signals receives a Common Pilot Channel, which is a reference signal that said base station is always transmitting on all frequencies, and monitors downlink signals.

4. A mobile communication system according to claim 1, wherein said mobile station further comprises:

  means for, upon receiving notification of failure to receive training signals from a base station, retransmitting said training signals at a power that is obtained by adding a predetermined offset power to the transmission power that was used at the time of transmitting the preceding training signals.

5. A mobile communication system according to claim 4, wherein said means for performing training, upon succeeding in receiving said training signals, measures and holds the reception timing and reception SIR (Signal Interference Ratio) at that time.

6. A base station that performs CDMA (Code Division Multiple Access) communication with a mobile station, wherein this CDMA communication includes a compressed mode, which is a mode of intermittent communication having transmission gaps in which communication is not performed; said base station comprising:

  means for performing training of reception timing and transmission power by means of training signals in the uplink direction that are transmitted from said mobile station using said transmission gaps.

7. A base station according to claim 6, further comprising means for receiving said training signals based on the location of transmission gaps that is reported from said mobile station.

8. A base station according to claim 6, further comprising means for reporting failure to receive said training signals to a mobile station.

9. A base station according to claim 7, further comprising means for reporting failure to receive said training signals to a mobile station.

10. A base station according to claim 6, wherein said means for performing training, upon succeeding in receiving said training signals, measures and holds the reception timing and reception SIR (Signal Interference Ratio) at that time.

11. A mobile station that performs CDMA (Code Division Multiple Access) communication with a base station, wherein this CDMA communication includes a compressed mode, which is a mode of intermittent communication having transmission gaps in which communication is not performed; said mobile station comprising:

  means for using said transmission gaps to transmit training signals in the uplink direction.

12. A mobile station according to claim 11, further comprising:

  means for monitoring downlink signals in said transmission gaps; and
  means for, after completion of monitoring of said downlink signals, reporting to said base station the location of said transmission gaps in which the transmission of said training signals is to begin.

13. A mobile station according to claim 12, wherein said means for monitoring downlink signals receives a Common Pilot Channel, which is a reference signal that said base station is always transmitting on all frequencies, and carries out monitoring.

14. A mobile station according to claim 11, further comprising:

  means for, upon receiving notification of failure to receive training signals from said base station, retransmitting said training signals at a power that is obtained by adding a predetermined offset power to the transmission voltage that was used in the preceding transmission of said training signals.

15. A mobile station according to claim 11, wherein said base station, upon succeeding in receiving said training signals, measures and holds the reception timing and reception SIR (Signal Interference Ratio) at that time.

16. A method for inter-frequency HHO (Hard Hand Over) in a mobile communication system in which CDMA (Code Division Multiple Access) communication between a mobile station and a base station is performed that includes a compressed mode, which is a mode of intermittent communication having transmission gaps in which communication is not performed; said inter-frequency HHO method containing steps of:

  transmitting training signals in the uplink direction from said mobile station using said transmission gaps; and
  training the reception timing and transmission power in said base station by means of said training signals.

**17.** A method for inter-frequency HHO according to claim 16, further comprising steps of:

in said mobile station, monitoring downlink signals in said transmission gaps; and after completion of said monitoring of downlink signals, reporting, from said mobile station to said base station, the location of said transmission gap in which transmission of said training signals is to begin.

**18.** A method of inter-frequency HHO according to claim 17, wherein said step of monitoring downlink signals is a step of receiving a Common Pilot Channel, which is a reference signal that said base station is always transmitting on all frequencies, and performing monitoring.

**19.** A method of inter-frequency HHO according to claim 16, further comprising a step of:

in response to notification from said base station of failure to receive training signals, transmitting said training signals from said mobile station at a power that is obtained by adding a predetermined offset power to the transmission power used in that transmission.

**20.** A method of inter-frequency HHO according to claim 16, wherein said step of training is a step of, upon succeeding in receiving said training signals, measuring and holding the reception timing and reception SIR (Signal Interference Ratio) at that time.

# Fig. 1

normal communication ← → compressed mode

BTS1 :
inter·frequency HHO
origin frequency f1

downlink signals
uplink signals

gap

gap

MS — inter·frequency HHO
origin frequency f1

downlink signals
uplink signals

inter·frequency HHO
destination frequency f2

BTS2 :
inter·frequency HHO
destination frequency f2

C P I C H  (common pilot signals)

EP 1 445 878 A1

# Fig. 2

# F i g . 3

mobile station

base station

transmission data → trans- mission unit 16

reception unit 11

LO 15

searching/ decoding unit 12

→ reception data

ACK/NACK transmission unit 14

HHO control unit 13

radio network controller

# Fig. 4

mobile station

2

base station

transmission data → | trans-<br>mission<br>unit | 27

| reception<br>unit | 21

26 | LO |

| searching/<br>decoding<br>unit | 22

→ reception data

| uplink<br>training signal<br>reception unit | 23

| training signal<br>information<br>holding unit | 24

| HHO control<br>unit | 25

radio network controller

# Fig. 5

base station

3

mobile station

transmission data →

| trans-mission unit | reception unit |

37

31

LO

36

searching/ decoding unit — 32

→ reception data

uplink training signal transmission unit

downlink signal monitoring unit — 33

35

HHO control unit — 34

Fig. 6·

monitoring downlink signals
in compressed mode

training reception timing and transmission
power of uplink signals by uplink training
signals

change to HHO destination frequency
(inter-frequency HHO finished)

BTS1 :
inter-frequency HHO
origin
frequency f1

gap   NACK   NACK   ACK

downlink
signals
uplink
signals

gap

NACK   NACK   ACK

downlink
signals

MS

inter-frequency HHO
origin frequency f1

uplink
signals

inter-frequency HHO
destination
frequency f2

TxPow_ini

ΔTxPow

ΔTxPow

ΔSTR

BTS2 :
inter-frequency HHO destination
frequency f2

reception NG        reception NG

STR_rv

$\Delta STR = STR\_rv - STR\_trgt$

reception OK

EP 1 445 878 A1

# Fig. 7

```
                    ( start )
                        │
          ┌─────────────┤
          │             ▼
        NO     ◇ completion ◇       ~S1
          └────◇ of monitoring of ◇
               ◇ downlink signals? ◇
                        │
                      YES
                        ▼
         ┌────────────────────────────┐
         │ report completion of monitoring of │ ~S2
         │ downlink signals and the location │
         │ of the transmission gap to │
         │ destination BTS by HHO origin │
         │ frequency │
         └────────────────────────────┘
                        │
                        ▼
         ┌────────────────────────────┐
         │ TxPow ← TxPow_ini │ ~S3
         └────────────────────────────┘
                        │
                        ▼
         ┌────────────────────────────┐
         │ retx = 0 │ ~S4
         └────────────────────────────┘
                        │
          ┌─────────────┤
          │             ▼
         │    ┌────────────────────────────┐
         │    │ transmits uplink training │ ~S5
         │    │ signals at gap period using │
         │    │ transmission power TxPow │
         │    └────────────────────────────┘
         │             │
         │             ▼
        YES    ◇ receive ◇       ~S6
       ┌───────◇ ACK signals from ◇
       │       ◇ destination BTS? ◇
       │             │
       │            NO
       │             ▼                    NO
       │      ◇ retx < Nmax ◇ ──────────────────┐
       │      ◇     ?      ◇  ~S7               │
       │             │                           ▼
       │           YES              ┌────────────────────┐
       │             ▼              │ TxPow ← TxPow_ini │ ~S9
       │    ┌──────────────────┐    │ retx ← 0 │
       │    │ TxPow ← TxPow_ini │ ~S8 └────────────────────┘
       │    │   + TxPow │              │
       │    │ retx ← retx + 1 │        │
       │    └──────────────────┘       │
       │                               │
       └───────────┬───────────────────┘
                   ▼
         ┌────────────────────────────┐
         │ perform inter-frequency HHO, │ ~S10
         │ transmit uplink signals at │
         │ transmission power (TxPow+ΔSIR) │
         │ using HHO destination frequency │
         └────────────────────────────┘
                   │
                   ▼
                ( end )
```

# Fig. 8

```
                    ( start )
                        │
                        ▼
                  ╱ receive    ╲      NO
                 ╱ gap location ╲ ─────────────┐
                 ╲ information ? ╱              │
                  ╲     S11     ╱               │
                        │ YES                   │
                        ▼                       │
                  ╱ receive         ╲   NO      │
                 ╱ signals at gap location? ────┘
                 ╲        S12       ╱
                        │ YES
                        ▼
                  ╱ receive          ╲   NO
                 ╱ uplink training signals? ──────────────┐
                 ╲        S13        ╱                     │
                        │ YES                              ▼
                        ▼                    ┌──────────────────────────────┐
   ┌──────────────────────────────┐         │ transmit NACK signals by HHO  │  S14
   │ hold two values, that is Pos_rv:│ S15  │ origin frequency              │
   │ reception timing of uplink training│   └──────────────────────────────┘
   │ signals, and SIR_rv: reception SIR│
   │ of uplink training signals     │
   └──────────────────────────────┘
                        │
                        ▼
   ┌──────────────────────────────┐  S16
   │ calculate ΔSIR=(SIR_trgt)-(SIR_rv) │
   └──────────────────────────────┘
                        │
                        ▼
   ┌──────────────────────────────┐  S17
   │ transmit ACK signals including │
   │ information of ΔSIR            │
   └──────────────────────────────┘
                        │
                        ▼
   ┌──────────────────────────────┐  S18
   │ perform inter-frequency HHO, search│
   │ for signals in vicinity of Pos_rv │
   │ preponderantly by HHO destination │
   │ frequency                     │
   └──────────────────────────────┘
                        │
                        ▼
                     ( end )
```

hold two values, that is $Pos\_rv$: reception timing of uplink training signals, and $SIR\_rv$: reception SIR of uplink training signals

calculate $\Delta SIR = (SIR\_trgt) - (SIR\_rv)$

transmit ACK signals including information of $\Delta SIR$

perform inter-frequency HHO, search for signals in vicinity of $Pos\_rv$ preponderantly by HHO destination frequency

# Fig. 9

(a)

base
station ⟍1
(f1. f2)

2
base
station
(f2)

3 mobile station

movement direction

A

(f1)

cell

B

(b)

base
station ⟍1
(f1. f2)

2
base
station
(f2)

3 mobile station

mobile station ⟍3

A

(f1)

(f2)

cell

B

(c)

base
station ⟍1
(f1. f2)

2
base
station
(f2)

3 mobile station

mobile station

(f2)

A

(f1)

3

cell

B

(d)

base
station ⟍1
(f1. f2)

2
base
station
(f2)

3 mobile station

(f1)
→(f2)

A

cell

B

EP 1 445 878 A1

Fig. 10

(a)

(b)

## INTERNATIONAL SEARCH REPORT

| International application No. |
|---|
| PCT/JP02/11274 |

| A. CLASSIFICATION OF SUBJECT MATTER |
|---|
| Int.Cl$^7$ H04B7/26, H04J13/00 |
| |
| According to International Patent Classification (IPC) or to both national classification and IPC |

| B. FIELDS SEARCHED |
|---|
| Minimum documentation searched (classification system followed by classification symbols) |
| Int.Cl$^7$ H04B7/24-7/26, H04Q7/00-7/38, H04J13/00-13/06 |
| |
| Documentation searched other than minimum documentation to the extent that such documents are included in the fields searched |
| Jitsuyo Shinan Koho 1922-1996 Toroku Jitsuyo Shinan Koho 1994-2003 |
| Kokai Jitsuyo Shinan Koho 1971-2003 Jitsuyo Shinan Toroku Koho 1996-2003 |
| |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | JP 8-500475 A (Telefon AB. LM Ericsson), 16 January, 1996 (16.01.96), Full text; all drawings & AU 9470130 A & BR 9405405 A & CN 1112384 A & EP 0647380 A1 & FI 9500627 A & NZ 267748 A & SG 78248 A1 & TW 306102 A & US 5533014 A & WO 94/29981 A1 | 1-20 |
| A | JP 2001-136123 A (Matsushita Electric Industrial Co., Ltd.), 18 May, 2001 (18.05.01), Full text; all drawings & AU 200064735 A & CN 1319285 A & EP 1119117 A1 & WO 01/15343 A1 | 1-20 |

☐ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 January, 2003 (31.01.03) | 12 February, 2003 (12.02.03) |

| Name and mailing address of the ISA/ | Authorized officer |
|---|---|
| Japanese Patent Office | |
| Facsimile No. | Telephone No. |

Form PCT/ISA/210 (second sheet) (July 1998)